# EUROPÄISCHE PATENTANMELDUNG

(11) **EP 2 522 874 A1**
(43) Veröffentlichungstag der Anmeldung: **14.11.2012**
(21) Anmeldenummer: 11166006.4
(22) Anmeldetag: 13.05.2011
(51) Int. Cl.: F16D 55/226, F16D 55/28, F16D 65/46, F16D 55/00, B66D 5/14

(54) **Aufzugsantrieb mit Bremse**

(71) Anmelder: Inventio AG, 6052 Hergiswil NW (CH)
(72) Erfinder: Ammon, Urs, 6030, Ebikon (CH)
(74) Vertreter: Blöchle, Hans

(57) **Zusammenfassung**

Im stromlosen Zustand eines Bremsmagneten (9) wird ein Bremsanker (11) mittels Druckfedern in Richtung eines Gehäuses (5) beaufschlagt. Der Bremsanker (11) drückt wiederum auf einen ersten Bremsbelag (13) einer rotierenden Bremsscheibe (14). Die Bremsscheibe (14) ist am Ende der Antriebswelle (2) in achsialer Richtung verschiebbar gelagert. Durch die Krafteinwirkung des Bremsankers (11) auf den ersten Bremsbelag (13) verschiebt sich die Bremsscheibe (14) in Richtung Antrieb (1) und drückt mit einem zweiten Bremsbelag (16) auf einen am Gehäuse (5) angeordneten Bremsring (17). Zwischen dem Bremsring (17) und dem Gehäuse (5) ist ein Flachfilmsensor angeordnet, der entsprechend der Krafteinwirkung des Bremsankers (11) auf den Bremsring (17) ein Signal erzeugt.

## Beschreibung

Die Erfindung betrifft einen Aufzugsantrieb mit einer Bremse zum Stillsetzen des Aufzugsantriebs, wobei mindestens eine Druckfeder über einen Bremsanker und über Bremsbeläge auf eine Bremsscheibe einwirkt.

Aus der Schrift WO 2007/083754 A1 ist ein Aufzugsmotor mit einer Bremse bekannt geworden, die am einen Ende der Motorwelle angeordnet ist. Ein hohlzylinderförmiger Bremsmagnet wirkt auf einen Bremsanker, der entgegen von Druckfedern arbeitet und die Bremse lüftet. Im stromlosen Zustand des Bremsmagneten beaufschlagen die Druckfedern den Bremsanker, der wiederum auf einen ersten Bremsbelag einer rotierenden Bremsscheibe drückt. Die Bremsscheibe ist am Ende der Motorwelle in achsialer Richtung verschiebbar gelagert. Durch die Krafteinwirkung des Bremsankers auf den ersten Bremsbelag verschiebt sich die Bremsscheibe in Richtung Motor und drückt mit einem zweiten Bremsbelag auf einen am Motorgehäuse angeordneten Bremsring.

Die Erfindung, wie sie in den Hauptansprüchen gekennzeichnet ist, löst die Aufgabe, eine überwachbare, an einem Aufzugsantrieb angeordnete Bremse zu schaffen.

Vorteilhafte Weiterbildungen der Erfindung sind in den abhängigen Patentansprüchen angegeben.

Die durch die Erfindung erreichten Vorteile sind im Wesentlichen darin zu sehen, dass nicht nur die Schaltzustände der Bremse, sondern auch die Bremswirkung der Bremse überwachbar sind. Die Überwachung der Schaltzustände wie "Bremse gelüftet" oder "Bremse eingefallen" sowie die Überwachung der Bremswirkung der Bremse sowie die Überwachung der Bremswirkung jeder Druckfeder erhöht die Sicherheit der Aufzugspassagiere wesentlich. Dank der Überwachung kann die Bremse rechtzeitig und vor dem totalen Versagen gewartet werden.

Anhand der beiliegenden Figuren wird die vorliegende Erfindung näher erläutert.

Es zeigen:
Fig. 1 eine schematische Darstellung eines Aufzugsantriebs,
Fig. 2 einen Schnitt durch den Aufzugsantrieb,
Fig. 2a eine schematische Darstellung der Bremse in gelüftetem Zustand,
Fig. 3 eine Sicht auf das bremsseitige Ende des Aufzugsantriebs ohne Bremse,
Fig. 3a Einzelheiten eines Bremsrings mit einem Sensor,
Fig. 4 eine Ausführungsvariante zur Anordnung des Sensors und
Fig. 5 eine Ausführungsvariante der Bremse mit einer Bremsscheibe ohne Bremsbeläge.

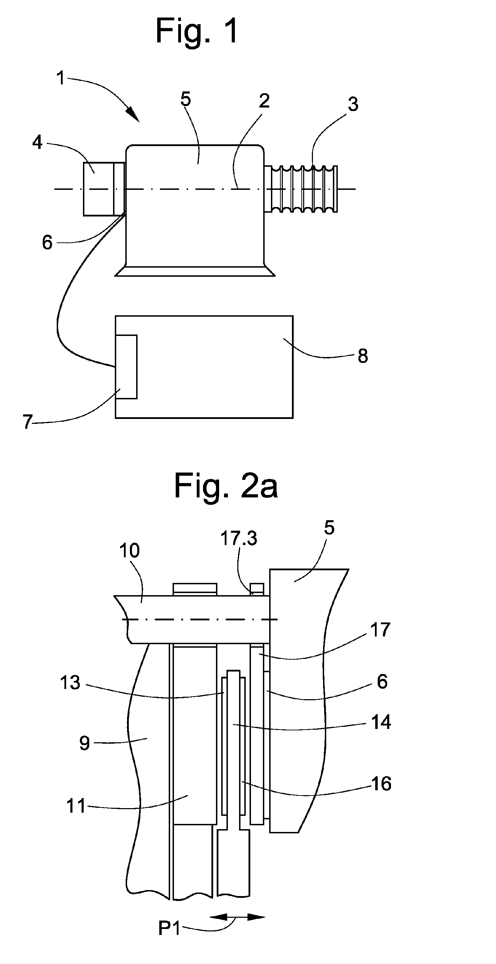

Fig. 1 zeigt eine schematische Darstellung eines Aufzugsantriebs 1 mit einer Antriebswelle 2, an deren einen Ende eine Treibscheibe 3 und an deren anderen Ende eine Bremse 4 angeordnet sind. Zwischen der Bremse 4 und einem Gehäuse 5 des Antriebs 1 ist ein Sensor 6 vorgesehen, der die Bremse 4 überwacht. Das Signal des Sensors 6 wird einer elektrischen Schaltung 7 zugeführt und von dieser aufbereitet und ausgewertet. Sicherheitsrelevante Bremszustände werden von der elektrischen Schaltung 7 an eine Aufzugssteuerung 8 weitergeleitet, die den Aufzugsantrieb 1 bei bremsbedingten, für die Aufzugspassagiere eine Gefahr darstellende Zustände stillsetzt.

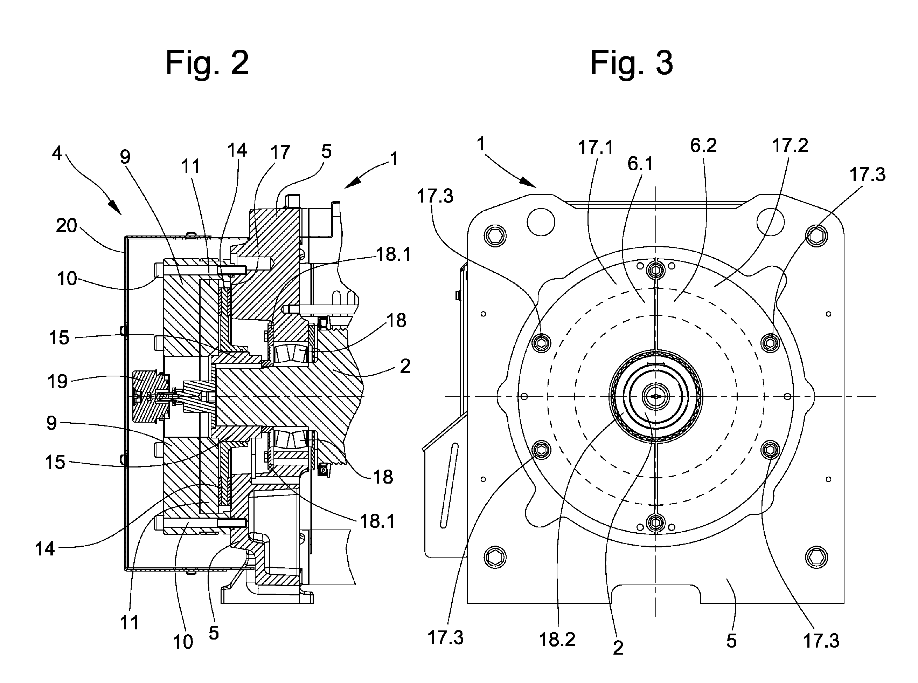

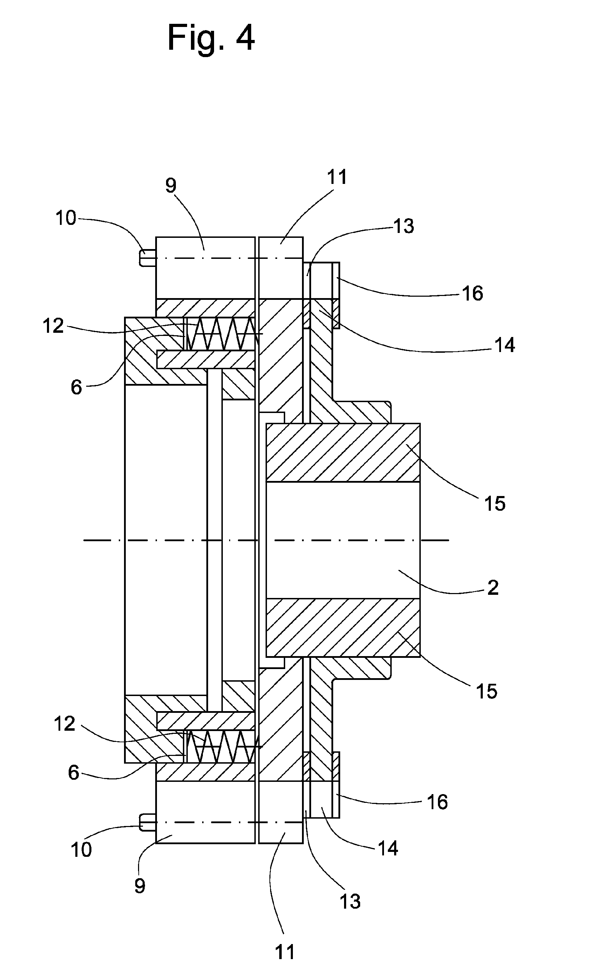

Fig. 2 zeigt einen Schnitt durch den Antrieb 1 und die am anderen Ende der Antriebswelle 2 angeordnete Bremse 4. Ein Bremsmagnet 9 ist mittels Schrauben 10 fest mit dem Gehäuse 5 verbunden. Im stromlosen Zustand des Bremsmagneten 9 wird ein Bremsanker 11 mittels in der Fig. 4 gezeigten Druckfedern 12 in Richtung des Gehäuses 5 beaufschlagt. Der Bremsanker 11 drückt wiederum auf einen in Fig. 2a gezeigten, ersten Bremsbelag 13 einer rotierenden Bremsscheibe 14. Die Bremsscheibe 14 ist am Ende der Antriebswelle 2 in achsialer Richtung verschiebbar gelagert. Ein Schiebesitz 15 ermöglicht die in Fig. 2a mit einem Pfeil P1 symbolisierte Bewegung in achsialer Richtung der Antriebswelle 2. Durch die Krafteinwirkung des Bremsankers 11 auf den ersten Bremsbelag 13 verschiebt sich die Bremsscheibe 14 in Richtung Antrieb 1 und drückt mit einem zweiten Bremsbelag 16 auf einen am Gehäuse 5 angeordneten Bremsring 17. Die Antriebswelle 2 stützt sich an einem am Gehäuse 5 angeordneten Rollenlager 18 mit Lagerdeckel 18.1 ab und ist um ihre Längsachse drehbar. Ein die Umdrehungen der Antriebswelle 2 messender Geber 19 ist mit der Stirnseite der Antriebswelle 2 verbunden. Eine Haube 20 deckt die Bremse 4 ab.

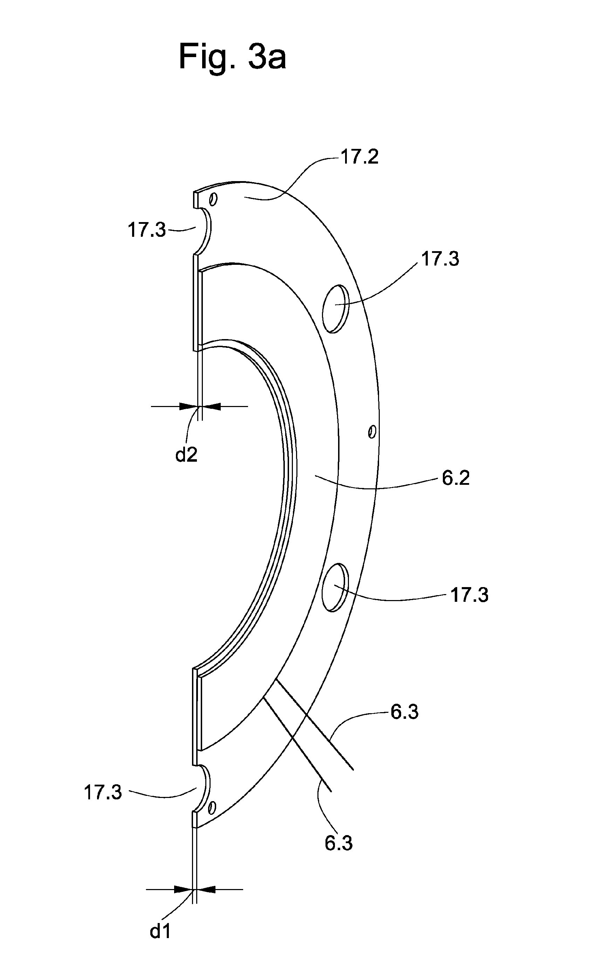

Fig. 3 zeigt eine Sicht auf das bremsseitige Ende des Aufzugsantriebs 1 ohne Bremse 4. Der Bremsring 17 besteht beispielsweise aus einer ersten Hälfte 17.1 und aus einer zweiten Hälfte 17.2. Die beiden Hälften 17.1, 17.2 weisen Bohrungen 17.3 auf. Die Schrauben 10 durchdringen die Bohrungen 17.3 und sichern so die beiden Hälften 17.1, 17.2 gegen Verdrehung. Auch der zwischen dem Bremsring 17 und dem Gehäuse 5 angeordnete Sensor 6 besteht beispielsweise aus einer ersten Hälfte 6.1 und aus einer zweiten Hälfte 6.2.

Fig. 3a zeigt Einzelheiten einer Hälfte 17.1, 17.2 des kreisringförmigen Bremsrings 17 und einer Hälfte 6.1, 6.2 des kreisringförmigen Sensors 6. Die Dicke des Bremsrings 17 und die Dicke des Sensors 6 sind nicht massstäblich gezeigt. Die Dicke d1 des Bremsrings 17 kann beispielsweise einige Millimeter sein, die Dicke d2 des Sensors 6 kann beispielsweise einige Mikrometer sein. Der Sensor 6 kann beispielsweise ein auf dem Piezoprinzip arbeitender Flachfilmsensor sein, der an seinen beiden Anschlüssen 6.3 eine Spannung gemäss der auf den Bremsring 17 wirkenden Kraft erzeugt. Der Bremsring 17 und der Sensor 6 können auch in drei oder mehr Teile geteilt sein, wobei das Signal eines jeden Sensorteils beispielsweise getrennt weiterverarbeitet wird. So kann beispielsweise eine fehlerhafte Bremskraft auf den jeweiligen Teil lokalisiert werden.

Fig. 4 zeigt eine Ausführungsvariante zur Anordnung des Sensors 6. Bei dieser Variante ist ein Sensor 6 je Druckfeder 12 vorgesehen. Gesamthaft können beispielsweise 6 Druckfedern 12 über den Umfang des Bremsankers 11 verteilt vorgesehen sein. Der Sensor 6 kann beispielsweise ein auf dem Piezoprinzip arbeitender Flachfilmsensor sein, der an seinen beiden Anschlüssen 6.3 eine Spannung gemäss der auf ihn wirkenden Kraft erzeugt. Bei eingefallener Bremse bzw. im stromlosen Zustand des Bremsmagneten 9 misst der Sensor 6 je Druckfeder 12 die auf den Bremsanker 11 wirkende Kraft der Druckfeder 12. Bei gelüfteter Bremse bzw. bei einem mit Strom beaufschlagten Bremsmagneten 9 wird der Bremsanker 11 gegen die Druckfedern 12 gedrückt und der Sensor 6 wird je Druckfeder 12 mit einer erhöhten Federkraft beaufschlagt und erzeugt eine entsprechend erhöhte Spannung an den Anschlüssen 6.3. Vorteilhaft bei dieser Variante ist, dass jede Druckfeder 12 einzeln überwachbar ist. Ein Federbruch oder ein Federklemmen ist für jede Druckfeder 12 einzeln feststellbar und kann auf die entsprechende Druckfeder 12 bezogen alarmiert werden.

Mit der Überwachung der Bremskraft mittels des Sensors 6 bzw. der Sensoren 6 kann auch der Zustand der Bremsbeläge 13, 16 überwacht werden. Die auf jeden Sensor 6 wirkende Kraft wird bei jeder Bremsbetätigung bzw. bei jedem Bremseinfallen gemessen und abgespeichert. Die jeweiligen Messwerte werden dann mit einer beispielsweise mit einer Lernbremsung festgestellten Referenzkraft je Sensor verglichen. Weicht der jeweilige Messwert um einen vorbestimmten Wert vom Referenzwert ab, wird die Aufzugssteuerung 8 den Antrieb 1 stillsetzen. Sinngemässes gilt für die auf den Sensor 6 wirkende, oben genannte erhöhte Federkraft bei gelüfteter Bremse.

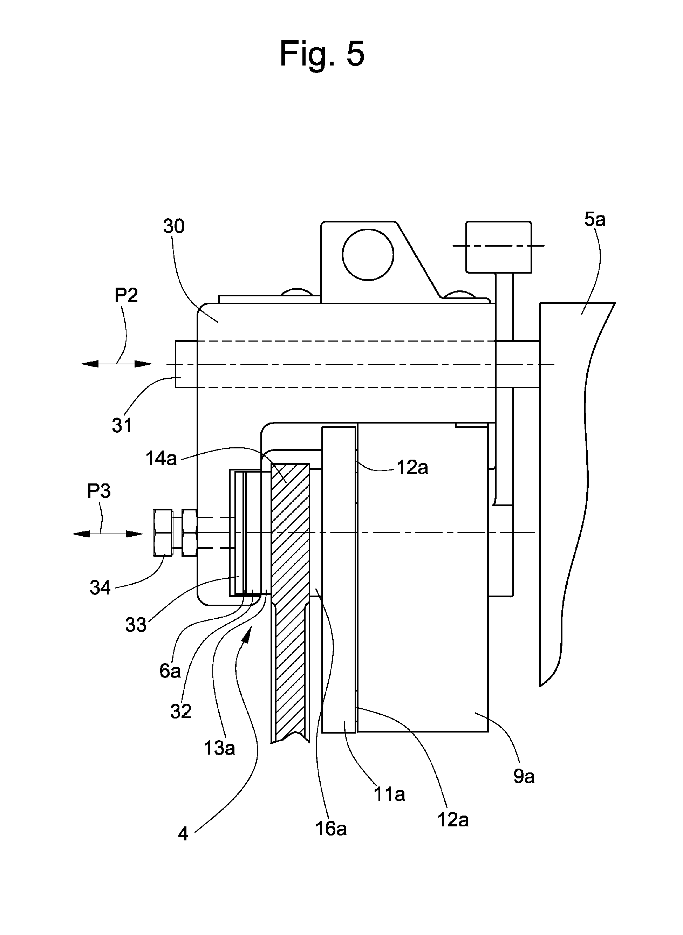

Fig. 5 zeigt eine Ausführungsvariante der Bremse 4 mit einer Bremsscheibe 14a ohne Bremsbeläge. Ein Bremssattel 30 ist verschiebbar an beispielsweise 2 Bolzen 31 gelagert. Die Verschieberichtung ist mit einem zweiten Pfeil P2 symbolisieret. Die Bolzen 31 sind fest mit dem Gehäuse 5a des Antriebs 1 verbunden. Ein Bremsmagnet 9a ist am Bremssattel 30 angeordnet, wobei mindestens eine im Bremsmagnet 9a integrierte Druckfeder 12a bei stromlosem Bremsmagnet 9a einen Bremsanker 11a in Richtung der Bremsscheibe 14a ohne Bremsbeläge mit einer Federkraft beaufschlagt. Am Bremsanker 11a ist ein zweiter Bremsbelag 16a angeordnet, ein erster Bremsbelag 13a ist an einem Träger 32 angeordnet, der vom Bremssattel 30 getragen wird. Zwischen dem Träger 32 und einer Druckplatte 33 ist ein Sensor 6a vorgesehen, der die Bremse 4 überwacht. Die Druckplatte 33 ist mittels einer Stellschraube 34 justierbar. Die Verschieberichtung ist mit einem dritten Pfeil P3 symbolisieret. Mit der Stellschraube 34 kann der erste Bremsbelag 13a nachgestellt werden. Dadurch kann der sich durch Abnutzung des ersten Bremsbelages 13a vergrössernde Spalt zwischen Bremsbelag und Bremscheibe 14a ausgeglichen werden. Der sich durch Abnutzung des zweiten Bremsbelages 16a vergrössernde Spalt zwischen Bremsbelag und Bremssscheibe 14a wird ebenfalls mittels der Stellschraube 34 ausgeglichen, weil der Bremssattel 30 verschiebbar an den Bolzen 31 gelagert ist. Zur Lüftung der Bremse 4 wird der Bremsmagnet 9a mit einem elektrischen Strom beaufschlagt, wobei der Bremsanker 11a entgegen der Federkraft der Druckfedern 12a vom Bremsmagneten 9a angezogen wird, dabei werden die Bremsbeläge 13a, 16a von der Bremsscheibe 14a gelöst und die Bremsscheibe 14a kann ungehemmt rotieren. Bei eingefallener Bremse bzw. im stromlosen Zustand des Bremsmagneten 9a misst der Sensor 6a die auf die Bremsscheibe 14a wirkende Kraft.

Der Bremssattel 30 kann auch ohne Stellschraube 34 und Druckplatte 33 vorgesehen sein. In diesem Fall ist der Sensor 6a zwischen dem ersten Bremsbelag 13a bzw. dem Träger 32 und dem Bremssattel 30 angeordnet.

## Patentansprüche

1. Aufzugsantrieb (1) mit einer Bremse (4) zum Stillsetzen des Aufzugsantriebs (1), wobei mindestens eine Druckfeder (12,12a) über einen Bremsanker (11,11a) und über Bremsbeläge (13,13a,16,16a) auf eine Bremsscheibe (14,14a) einwirkt,
**dadurch gekennzeichnet,**
**dass** zur Messung der Einwirkung der Druckfeder (12,12a) mindestens ein Sensor (6,6a) vorgesehen ist, der ein der Einwirkung gemässes, elektrisches Signal erzeugt.

2. Aufzugsantrieb nach Anspruch 1,
**dadurch gekennzeichnet,**
**dass** der Sensor (6,6a) eine Dicke (d2) im Mikrometerbereich aufweist.

3. Aufzugsantrieb nach Anspruch 1 oder 2,
**dadurch gekennzeichnet,**
**dass** die Bremsbeläge (13,16) an der Bremsscheibe (14) angeordnet sind,
**dass** einer der Bremsbeläge (16) auf einen Bremsring (17) einwirkt und
**dass** der Sensor (6) zwischen dem Bremsring (17) und einem Gehäuse (5) des Antriebs (1) angeordnet ist.

4. Aufzugsantrieb nach Anspruch 3,
**dadurch gekennzeichnet,**
**dass** der Bremsring (17) kreisringförmig ist und aus mehreren Teilen (17.1, 17.2) besteht und
**dass** der Sensor (6) kreisringförmig ist und aus mehreren Teilen (6.1, 6.2) besteht.

5. Aufzugsantrieb nach Anspruch 1 oder 2,
**dadurch gekennzeichnet,**
**dass** je Druckfeder (12) ein Sensor (6) vorgesehen ist, der ein, der von der Druckfeder (12) ausgehenden Kraft gemässes elektrisches Signal erzeugt.

6. Aufzugsantrieb nach Anspruch 5,
**dadurch gekennzeichnet,**
**dass** der Sensor (6) zwischen der Druckfeder (12) und einem Gehäuse (5) des Antriebs (1) angeordnet ist.

7. Aufzugsantrieb nach Anspruch 1 oder 2,
**dadurch gekennzeichnet,**
**dass** ein erster Bremsbelag (13a) an einem Bremssattel (30) und dass ein zweiter Bremsbelag (16a) an einem Bremsanker (11a) angeordet sind, wobei der Bremsanker (11a) in Wechselwirkung steht mit einem am Bremssattel (30) angeordneten Bremsmagnet (9a) und
**dass** der Sensor (6a) zwischen dem ersten Bremsbelag (13a) und dem Bremssattel (30) angeordnet ist.

8. Aufzugsantrieb nach Anspruch 7,
**dadurch gekennzeichnet,**
**dass** der Sensor (6a) zwischen dem ersten Bremsbelag (13a) und einer mittels Stellschraube (34) des Bremssattels (30) justierbaren Druckplatte (33) angeordnet ist.

9. Verfahren zur Überwachung einer von einer Druckfeder (12) ausgehenden Bremskraft mittels eines Sensors (6) in einem Aufzugsantrieb (1) nach den Ansprüchen 1 bis 8, wobei nach folgenden Schritten verfahren wird:
a) Feststellen einer Referenzkraft für jeden Sensor (6,6a) mittels einer Lernbremsung,
b) Bestimmen eines Messwertes für jeden Sensor (6,6a) durch Messen einer den Sensor (6,6a) beaufschlagenden Kraft bei Bremsbetätigung,
c) Vergleichen der beaufschlagenden Kraft mit der Referenzkraft und
d) Stillsetzen des Aufzugsantriebs falls der jeweilige Messwert um einen vorbestimmten Wert vom Referenzwert abweicht.
